# EUROPÄISCHE PATENTSCHRIFT

(11) **EP 2 163 429 B1**
(45) Veröffentlichungstag und Bekanntmachung des Hinweises auf die Patenterteilung: **12.09.2012**
(21) Anmeldenummer: 09008606.7
(22) Anmeldetag: 01.07.2009
(51) Int. Cl.: B60R 1/00, B60K 31/00, B60K 35/00, B60Q 1/48, B60R 25/10, G06T 3/40, G06T 7/20

(54) **Verfahren zur bildgestützten Überwachung einer Fahrzeugumgebung, insbesondere einer Umgebung eines Nutzfahrzeuges**
Method for image-supported monitoring of a vehicle environment, especially the environment of a goods vehicle
Procédé de surveillance assistée par image d'un environnement de véhicule, notamment d'un environnement de véhicule utilitaire

(30) Priorität: 29.08.2008 DE 102008045007
(43) Veröffentlichungstag der Anmeldung: 17.03.2010
(73) Patentinhaber: MAN Truck & Bus AG, 80995 München (DE)
(72) Erfinder: Dörner, Karlheinz, 85757 Karlsfeld (DE); Schwertberger, Walter, 82278 Althegnenberg (DE)

(56) Entgegenhaltungen:
- EP-A1- 1 363 237
- EP-A2- 1 264 734
- WO-A1-2006/022630
- DE-A1-102007 059 735
- US-A- 5 230 400
- US-A1- 2007 165 910

## Beschreibung

Die Erfindung betrifft ein Verfahren zur bildgestützten Überwachung einer Umgebung eines Nutzfahrzeuges, nach dem Oberbegriff des Anspruchs 1.

Aus der DE 20 2005 014 989 U1 ist bereits eine Vorrichtung zur bildgestützten Umgebungserfassung bei Fahrzeugen bekannt, die wenigstens eine omnidirektionale Kamera umfasst, die an der Fahrzeugaußenhaut angeordnet ist und Bildinformationen der Umgebung erfasst. Weiterhin ist im Fahrzeuginnenraum eine Anzeigeeinheit vorgesehen, welche mit der omnidirektionalen Kamera in Verbindung steht und die dem Fahrer die erfassten Bildinformationen darbietet. Konkret ist die omnidirektionale Kamera in einer Position an der Fahrzeugaußenhaut angeordnet, die sich in ihrer Höhe unterhalb der Höhe der Fahrzeugaußenspiegel befindet. Durch eine derartige Einbauposition der omnidirektionalen Kamera soll es möglich sein, einen relativ großen Sichtbereich zu erfassen, wobei in den Bildinformationen eine Abschattung von interessierenden Umgebungsbereichen durch die Fahrzeugaußenspiegel verhindert werden soll.

Insbesondere soll mit einer derartigen Kamerapositionierung der für den Fahrer nicht einsehbare Sichtbereich (Totwinkelbereich) direkt vor dem Fahrzeug erfasst werden, wobei selbst flache Hindernisse auf der Fahrbahnoberfläche erfasst werden können sollen.

Weiter ist aus der DE 100 35 223 A1 eine Vorrichtung und ein Verfahren zur Überwachung der Umgebung eines Fahrzeuges mithilfe eines Hindernis-Erfassungssystems bekannt, das eine Mehrzahl von am Fahrzeug befestigten Kameras, eine Auswerteeinheit zur Auswertung bzw. zur Erzeugung eines von den Kameras aufgenommenen Bildes des Hindernisses sowie eine optische Anzeigeeinrichtung zur Darstellung des Bildes umfasst. Um zu vermeiden, dass die von den Einzelkameras aufgenommen Einzelbilder, die zu einem Gesamtbild zusammengesetzt werden, die Distanz von sich dem Fahrzeugheck nähernden Hindernissen perspektivisch verzerrt darstellen und damit lediglich eine schwere Einschätzung des konkreten Abstandes des Hindernisses zum Fahrzeugheck ermöglichen, ist vorgesehen, dass sich die Blickfelder von zwei benachbarten, heckseitigen Kameras überschneiden, so dass die Einzelbilder dieser benachbarten Kameras zu einem zusammenhängenden Gesamtbild ohne perspektivische Verzerrungen zusammengesetzt werden können, wobei zudem das Fahrzeug auf der optischen Anzeigeeinrichtung in das Gesamtbild projiziert und als Teil des Gesamtbildes mit dargestellt wird.

Aus der EP 1 264 734 A2 ist eine Überwachungsvorrichtung zur Überwachung einer Fahrzeugumgebung bekannt, die bewegliche Objekte in der Nähe eines Fahrzeugs mittels Bildaufnahme- und Bildverarbeitungseinrichtungen erfasst, bearbeitet und optisch darstellt. Die Positionen der beweglichen Objekte können auf einem Display im genannten Fahrzeug angezeigt werden. Gegebenenfalls können zusätzlich die Geschwindigkeiten der Objekte bezüglich des genannten Fahrzeugs mittels Vektordarstellungen auf dem Display angezeigt werden. Bei Unterschreitung einer vorgegebenen Distanz zwischen Fahrzeug und beweglichem Objekt kann beispielsweise eine Blinkwarnung auf dem Display ausgegeben werden. Die Überwachungsvorrichtung ist vornehmlich zur Erfassung entgegenkommender oder neben besagtem Fahrzeug fahrender Fahrzeuge vorgesehen.

Der nächstliegende Stand der Technik ist in der EP 1264 734 A2 zu sehen.

Demgegenüber ist es Aufgabe der vorliegenden Erfindung, ein Verfahren zur bildgestützten Überwachung einer Umgebung eines Nutzfahrzeuges, zur Verfügung zu stellen, mittels dem eine noch bessere und erweiterte Umgebungsüberwachung möglich ist.

Diese Aufgabe wird gelöst mit den Merkmalen des Anspruchs 1.

Erfindungsgemäß wird ein Verfahren zur bildgestützten Überwachung einer Fahrzeugumgebung von Nutzfahrzeugen vorgeschlagen, bei dem wenigstens eine bildgebende Einrichtung bei einem Fahrzeugstillstand oder einer eine vorgegebene Fahrzeugmindestgeschwindigkeit unterschreitenden Fahrzeuggeschwindigkeit aktiviert wird. Bei stehendem oder nahezu stehendem Fahrzeug werden Objektbewegungen innerhalb des definierten Umgebungsbereiches durch Analyse des optischen Flusses erfasst. Dabei kann es gemäß einer vorteilhaften Weiterbildung des Verfahrens hilfreich sein, dass bei der Aktivierung des Systems ein Referenzbild des definierten Umgebungsbereichs erfasst, gespeichert und als Vergleich bei der Bildanalyse verwendet wird. Es wird ein Warnsignal ausgegeben, wenn sich bei der Auswertung des optischen Flusses mittels der Auswerteeinrichtung ergibt, dass die den optischen Fluss verursachenden Objektbewegungen einen vorgegebenen Bewegungs-Toleranzwert überschreiten und zusätzlich festgestellt wird, dass sich die die Objektbewegungen verursachenden Objekte in einem definierten Grenzwertbereich befinden oder in diesen Grenzwertbereich während ihrer Bewegung eindringen und damit einen vorgegebenen Abstandsgrenzwert unterschreiten. Dadurch werden unnötige Warnungen vermieden, wenn sich das Objekt nur geringfügig bewegt (z. B. um 10 cm oder um 20 cm).

Des weiteren wird die wenigstens eine bildgebende Einrichtung kurz nach einem Anfahren des Nutzfahrzeuges deaktiviert, wenn von dieser ein das Warnsignal auslösendes Objekt nicht angezeigt wird und ein Warnsignal demzufolge unterbleibt. Besonders bevorzugt wird hierbei wenigstens eine Kamera als bildgebende Einrichtung vorne rechts am Fahrzeug, insbesondere am Nutzfahrzeug angebracht, die z. B. den besonders kritischen Umgebungsbereich vor dem Fahrzeug, insbesondere vor einem Fahrzeugführerhaus eines Nutzfahrzeuges, und zusätzlich den Umgebungsbereich rechts neben dem Fahrzeug, das heißt den beifahrerseitigen Seitenbereich, erfasst. Bei Rechtslenkerfahrzeugen ist die Anordnung dann entsprechend umgekehrt.

Damit wird ein Fahrerassistenzsystem zur Verfügung gestellt, das den Fahrer bei stehendem und anfahrendem Fahrzeug warnt, wenn sich während des Fahrzeugstillstandes ein Objekt dem Fahrzeug angenähert hat. Das System wird aktiv, sobald das Fahrzeug zum Stillstand kommt und deaktiviert, vorzugsweise wieder kurz nach dem Anfahren des Fahrzeuges.

Als Abstandsgrenzwert wird bevorzugt ein als Warnsignal-Abstandswert bezeichneter, definierter Abstand des Objektes vom Fahrzeug vorgegeben.

Erfindungsgemäß wird somit eine Warnung ausgegeben, wenn sich das Objekt um mehr als den definierten Bewegungs-Toleranzwert bewegt und dabei der Abstandsgrenzwert zum Fahrzeug unterschritten ist oder wird; das heißt das Objekt kommt bei dieser erforderlichen Mindestbewegung in den Bereich des Warnsignal-Abstandsgrenzwerts oder das Objekt befindet sich schon von vornherein in diesem Bereich und bewegt sich dann um mehr als den Bewegungs-Toleranzwert.

Gemäß einer besonders bevorzugten Weiterbildung des Verfahrens kann bei aus der Fahrzeugbedienung erkennbarem Anfahrvorgang, insbesondere bei einem bevorstehenden Anfahrvorgang, oder bei direkt anfahrendem Fahrzeug und einem bereits ausgegebenen Warnsignal aufgrund eines im definierten Umgebungsbereich georteten Objektes ein weiterer, zweiter Abstandsgrenzwert vorgegeben sein bzw. vorgegeben werden, der näher zum Fahrzeug hin liegt als der Warnsignal-Abstandsgrenzwert, wobei ein Alarmsignal ausgegeben wird, wenn sich bei der Auswertung des optischen Flusses mit der Auswerteeinrichtung ergeben sollte, dass das Warnsignal auslösende Objekt auch den zweiten Abstandsgrenzwert über- bzw. unterschreitet. Bevorzugt sollte sich dabei das Alarmsignal vom Warnsignal deutlich unterscheiden.

So kann das Warnsignal beispielsweise ein optisches Warnsignal in Form einer Warnlampe im Fahrzeuginnenraum sein. Alternativ oder zusätzlich dazu kann das Warnsignal aber auch in Form eines auf einem Bildschirm im Fahrzeuginnenraum dargestellten Bildes sein, welches sowohl die Umgebung als auch das das Warnsignal auslösende Objekt sowie bevorzugt auch das Fahrzeug mit seiner Fahrzeugaußenkontur zeigt. Das Alarmsignal dagegen kann ein vom Fahrer deutlich wahrnehmbares akustisches Warnsignal sein.

Damit werden somit zwei unterschiedliche Warnstufen zur Verfügung gestellt, die jeweils in Verbindung mit einem sich in einem kritischen Bereich befindenden und sich dem Fahrzeug nähernden Objekt bestimmte, definierte Warn- bzw. Alarmsignale auslösen.

Dabei können für einzelne Umgebungsteilbereiche innerhalb des definierten Umgebungsbereiches unterschiedliche Toleranzwerte vorgegeben sein. Beispielsweise können diese einzelnen Umgebungsteilbereiche zum einen der Bereich vor dem Fahrzeug, insbesondere vor dem Fahrzeugführerhaus, und zum anderen der Bereich rechts neben dem Fahrzeug sein. Grundsätzlich besteht auch die Möglichkeit, alternativ oder zusätzlich den Fahrerseitenbereich, das heißt bei einem Linkslenker die linke Seite in analoger Weise zu erfassen und damit zu überwachen.

Die Kamera selbst ist bevorzugt durch eine omnidirektionale Kamera gebildet.

Zur Berechnung des optischen Flusses werden bevorzugt differentielle Verfahren verwendet, die in der Regel bildpunktweise arbeiten. Es können aber auch blockweise arbeitende Verfahren verwendet werden, die in der Bildcodierung und in der Photogrammetrie verbreitet sind. Auch die Bewegungsschätzung mittels der auf der Fourier-Transformation aufbauenden Phasenkorrelation kann grundsätzlich als Methode zur Berechnung des optischen Flusses herangezogen werden.

Die Erfindung wird nachfolgend anhand einer Zeichnung näher erläutert.

Es zeigen:

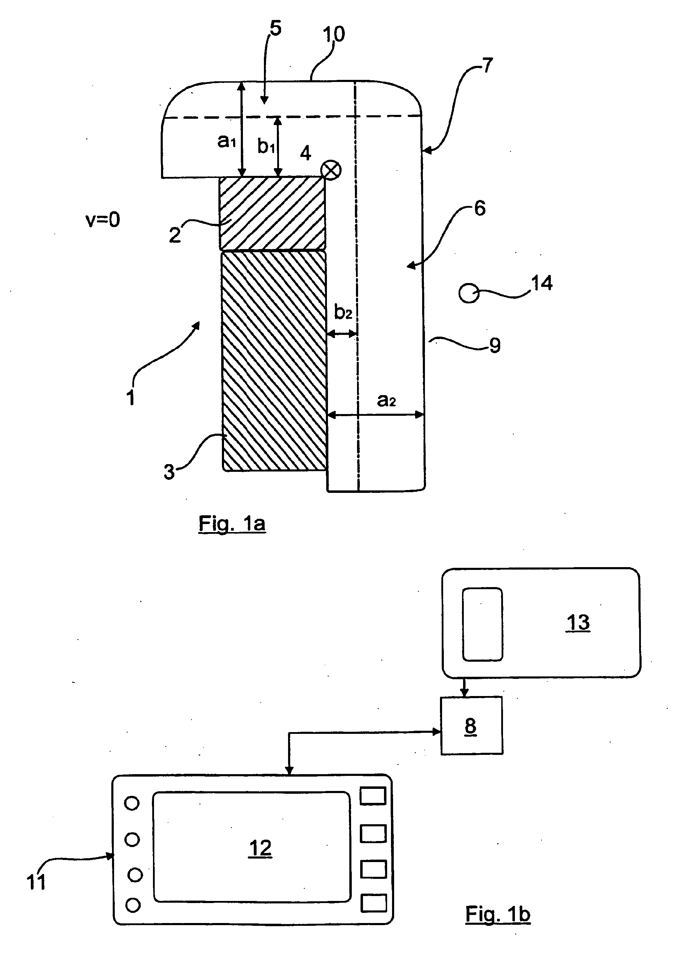

- Fig. 1 a: schematisch eine Draufsicht auf ein stillstehendes Fahrzeug mit einem von ein einer Kamera erfassten Umgebungsbereich, wobei sich im erfassten Umgebungsbereich kein Objekt befindet,
- Fig. 1 b: schematisch eine im Fahrzeuginnenraum angeordnete Anzeigeeinrichtung,
- Fig. 2a: eine der Fig. 1a entsprechende Darstellung mit in den definierten Umgebungsbereich eingedrungenem, sich dem Fahrzeug näherndem Objekt,
- Fig. 2b: die Anzeigeeinrichtung der Fig. 1b mit optischem Warnsignal,
- Fig. 3a: eine der Fig. 1a und der Fig. 2a entsprechende Darstellung, allerdings bei anfahrendem Fahrzeug, bei dem das in den definierten Umgebungsbereich eingedrungene Objekt auch einen zweiten vorgegebenen Abstandsgrenzwert unterschreitet, und
- Fig. 3b: die Anzeigeeinrichtung der Fig. 1b und 2b in Verbindung mit einem ein akustisches Alarmsignal ausgebenden Lautsprecher.

In der Fig. 1a ist schematisch eine Draufsicht auf ein Nutzfahrzeug 1 mit einem Fahrzeugführerhaus 2 und einem Auflieger 3 gezeigt, wobei vorne rechts am Fahrzeugführerhaus 2 eine Kamera 4 angeordnet ist, die einen vor dem Fahrzeugführerhaus 2 liegenden ersten Umgebungsteilbereich 5 sowie einen zweiten, rechts neben dem Nutzfahrzeug 1 liegenden zweiten Umgebungsteilbereich 6 bildlich erfassen kann.

Die Kamera 4 bildet Bestandteil eines Fahrerassistenzsystems, das bei zum Stillstand (Geschwindigkeit v = 0 km/h) kommenden Nutzfahrzeug 1 aktiviert wird und mittels der Kamera 4 einen durch den ersten und zweiten Umgebungsteilbereich gebildeten definierten Umgebungsbereich 7 erfasst. Die Auswertung dieses Bildbereichs erfolgt anhand des optischen Flusses. Ergänzend kann das Bild bei Aktivierung des Systems als Referenzbild gespeichert und in einer Bestandteil einer Auswerteeinrichtung 8 (Fig. 1b) bildenden Speichereinrichtung ab- bzw. zwischengespeichert und zur Bestimmung von Objektbewegungen herangezogen werden.

Die in Richtung vom Fahrzeug weg äußersten Randbereiche 9, 10 definieren dabei jeweils für den ersten Umgebungsteilbereich 5 und den zweiten Umgebungsteilbereich 6 einen sogenannten Warnsignal-Abstandsgrenzwert a₁ bzw. a₂. Im hier gezeigten Beispielfall der Fig. 1a sind der Warnsignal-Abstandsgrenzwert a₁ und der Warnsignal-Abstandsgrenzwert a₂ ungefähr gleich groß. Diese können aber auch unterschiedlich groß vorgegeben sein.

Wie dies in der Fig. 1a weiter strichliert bzw. strichpunktiert eingezeichnet ist, ist sowohl innerhalb des ersten Umgebungsteilbereiches 5 als auch innerhalb des zweiten Umgebungsteilbereiches 6 noch jeweils ein zweiter Abstandsgrenzwert b₁ bzw. b₂ vorgegeben. Diese zweiten Abstandsgrenzwerte b₁ und b₂ liegen, wie dies aus der Fig. 1a deutlich ersichtlich ist, wesentlich näher zum Nutzfahrzeug 1 hin als die korrespondierenden Warnsignal-Abstandsgrenzwerte a₁ und a₂ der beiden Umgebungsteilbereiche 5, 6. Dabei ist hier lediglich schematisch und beispielhaft vorgesehen, dass der zweite Abstandsgrenzwert b₁ einen größeren Abstand zur Front des Fahrzeugführerhauses 2 aufweist, als der zweite Abstandsgrenzwert b₂ zur rechten Fahrzeugseite des Nutzfahrzeuges 1. Grundsätzlich könnten auch hier beide Abstandswerte b₁ und b₂ eine in etwa gleiche Größe aufweisen.

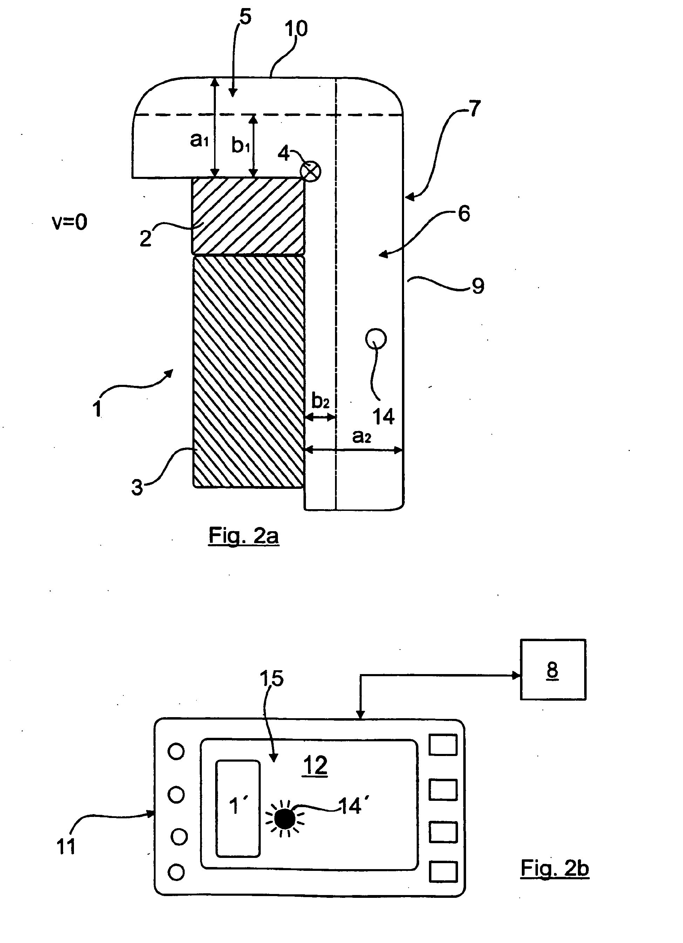

In gezeigten Beispielfall der Fig. 1a steht das Nutzfahrzeug 1 still und befindet sich kein Objekt, z. B. ein Mensch 14, innerhalb des definierten Umgebungsbereiches 7, so dass die im Fahrzeugführerhaus 2 und damit im Fahrzeuginnenraum angeordnete Anzeigeeinrichtung 11 bzw. ein Monitor 12 dieser Anzeigeeinrichtung 11 dunkel bleibt und kein Bild anzeigt. Das beim Fahrzeugstillstand erfasste Referenzbild 13, das in der Speichereinrichtung der Auswerteeinrichtung 8 abgespeichert, ist in der Fig. 1b ebenfalls schematisch und beispielhaft dargestellt.
Bewegt sich nunmehr der Mensch 14 in Richtung auf das Nutzfahrzeug 1 zu, wie in der Fig. 2a dargestellt, und ist diese Bewegung größer als ein definierter Bewegungs-Toleranzwert (z. B. 10 cm oder 20 cm) und unterschreitet der Abstand den Warnsignal-Abstandsgrenzwert a₂, was beides von der Auswerteeinrichtung 8 durch Erfassung und Ermittlung des optischen Flusses ermittelt wird, so wird von der Auswerteeinrichtung 8 ein optisches Warnsignal ausgegeben, indem, in der Fig. 2b beispielhaft und schematisch dargestellt, auf dem Monitor 12 ein Bild 15 angezeigt wird, das schematisch das Nutzfahrzeug 1' und den Menschen 14', z. B. blinkend oder in einer Signalfarbe, darstellt.

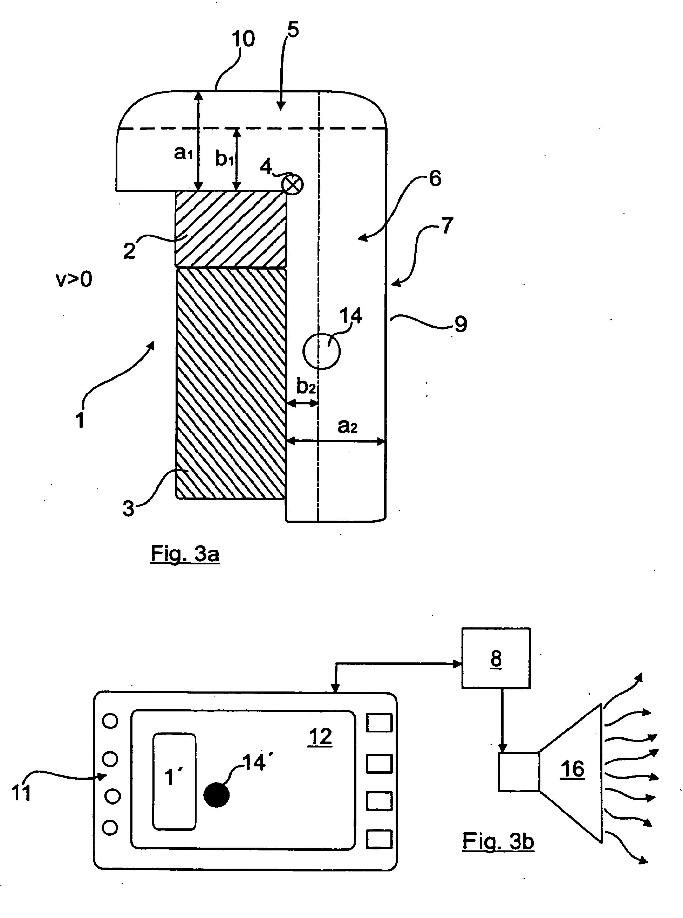

Findet eine weitere Annäherung des Menschen 14 zum Nutzfahrzeug 1 hin statt, wobei, wie in der Fig. 3a dargestellt, nunmehr auch der zweite Abstandsgrenzwert b₂ unterschritten wird, was die Auswerteeinrichtung 8 ebenfalls wiederum durch Auswertung des optischen Flusses innerhalb des definierten Umgebungsbereiches 7 erfasst und ermittelt, wird erst dann zusätzlich ein Alarmsignal ausgegeben, beispielsweise ein akustisches Alarmsignal über einen hier lediglich symbolisch in der Fig. 3b dargestellten Lautsprecher 16, wenn das Fahrzeug anfährt. Gleichzeitig kann auch weiterhin noch das Bild 15 auf dem Monitor 12 angezeigt werden, z. B. als insgesamt blinkendes Bild.

Für den Fall, dass das Fahrerassistenzsystem kein Objekt bzw. im hier gewählten Beispielfall einen Menschen 14 erfassen sollte, wird das Fahrerassistenzsystem kurz nach Anfahren des Fahrzeuges wieder deaktiviert.

## Patentansprüche

1. Verfahren zur bildgestützten Überwachung einer Umgebung eines Nutzfahrzeuges,
mit wenigstens einer bildgebenden Einrichtung (4), die bei einem Fahrzeugstillstand oder einer eine vorgegebene Fahrzeugmindestgeschwindigkeit unterschreitenden Fahrzeuggeschwindigkeit aktiviert wird und die einen definierten Umgebungsbereich (7) vor einem Fahrzeugführerhaus (2) und einen fahrer- und/oder beifahrerseitigen Fahrzeugseitenbereich erfasst,
wobei mittels einer Auswerteeinrichtung (8) bei stehendem Fahrzeug (1) der durch Objektbewegungen eines Objektes (14) innerhalb des definierten Umgebungsbereiches bedingte optische Fluss erfasst und ausgewertet wird, und
wobei ein Warnsignal ausgegeben wird, wenn sich bei der Auswertung des optischen Flusses mittels der Auswerteeinrichtung (8) ergibt, dass die den optischen Fluss verursachenden Objektbewegungen des Objektes (14) einen vorgegebenen Bewegungs-Toleranzwert überschreiten und einen vorgegebenen Abstandsgrenzwert (a₁,a₂,b₁,b₂) unterschreiten, und
wobei die wenigstens eine bild gebende Einrichtung (4) kurz nach einem Anfahren des Nutzfahrzeuges deaktiviert wird, wenn von dieser ein das Warnsignal auslösendes Objekt (14) nicht angezeigt wird.

2. Verfahren nach Anspruch 1, **dadurch gekennzeichnet, dass** zur Auswertung der Objektbewegungen bei Fahrzeugstillstand ein Referenzbild (13) aufgenommen und abgespeichert wird, wobei Objektbewegungen in Relation zu dem Referenzbild (13) ausgewertet werden.

3. Verfahren nach Anspruch 1 oder Anspruch 2, **dadurch gekennzeichnet, dass** als Abstandsgrenzwert (a₁, a₂) ein als Warnsignal-Abstandswert bezeichneter, definierter Abstandswert des Objektes (14) vom Fahrzeug (1) vorgegeben wird.

4. Verfahren nach Anspruch 3, **dadurch gekennzeichnet, dass** bei aus der Fahrzeugbedienung erkennbarem Anfahrvorgang, insbesondere einem bevorstehenden Anfahrvorgang, oder bei anfahrendem Fahrzeug und einem bereits ausgegeben Warnsignal aufgrund eines im definierten Umgebungsbereich georteten Objektes (14) ein weiterer, zweiter Abstandsgrenzwert (b₁, b₂) vorgegeben wird oder ist, der näher zum Fahrzeug (1) hin liegt als der Warnsignal-Abstandsgrenzwert (a₁, a₂), wobei ein Alarmsignal ausgegeben wird, wenn sich bei der Auswertung des optischen Flusses mit der Auswerteeinrichtung (8) ergibt, dass das das Warnsignal auslösende Objekt (14) auch den zweiten Abstandsgrenzwert (b₁, b₂) unterschritten hat.

5. Verfahren nach Anspruch 4, **dadurch gekennzeichnet, dass** sich das Alarmsignal vom Warnsignal unterscheidet.

6. Verfahren nach einem der Ansprüche 1 bis 5, **dadurch gekennzeichnet, dass** das Warnsignal ein optisches Warnsignal in Form einer Warnlampe im Fahrzeuginnenraum, insbesondere im Fahrzeugführerhaus (2), und/oder in Form eines auf einem Bildschirm (12) im Fahrzeuginnenraum, insbesondere Fahrzeugführerhaus (2), dargestellten Bildes ist, welches die Umgebung und das das Warnsignal auslösende Objekt (14) zeigt.

7. Verfahren nach Anspruch 6, **dadurch gekennzeichnet, dass** das Bild ferner das Fahrzeug (1) mit seiner Fahrzeugaußenkontur zeigt.

8. Verfahren nach einem der Ansprüche 4 bis 7, **dadurch gekennzeichnet, dass** das Alarmsignal ein akustisches Warnsignal ist.

9. Verfahren nach einem der Ansprüche 1 bis 8, **dadurch gekennzeichnet, dass** für einzelne Umgebungsteilbereiche (5, 6) innerhalb des definierten Umgebungsbereiches (7) unterschiedliche Abstandsgrenzwerte vorgegeben sind.

10. Verfahren nach Anspruch 9, **dadurch gekennzeichnet, dass** ein erster Umgebungsteilbereich (5) durch einen vorgegebenen Bereich vor dem Fahrzeug (1) und ein zweiter Umgebungsteilbereich (6) durch einen vorgegebenen Bereich auf einer oder beiden Längsseiten als Fahrerseite bzw. Beifahrerseite definiert ist.

11. Verfahren nach einem der Ansprüche 1 bis 10, **dadurch gekennzeichnet, dass** der definierte Umgebungsbereich (7) von wenigstens einer am Fahrzeug (1) angeordneten Kamera (4) als bildgebender Einrichtung, insbesondere einer omnidirektionalen Kamera bildlich erfasst wird.

12. Fahrerassistenzsystem für ein Nutzfahrzeug, zur Durchführung eines der Verfahren nach einem der Ansprüche 1 bis 11.

## Claims

1. Method for image-supported monitoring of an environment of a utility vehicle,
having at least one image-generating device (4) which is activated when the vehicle is in a stationary state or the vehicle speed undershoots a predefined vehicle minimum speed, and which detects a defined environment region (7) in front of a vehicle driver's cab (2) and a vehicle side region on the driver's side and/or front seat passenger's side,
wherein when the vehicle (1) is stationary the optical flow which is caused by object movements of an object (14) within the defined environment region is detected and evaluated by means of an evaluation device (8), and
wherein a warning signal is output if during the evaluation of the optical flow by means of the evaluation device (8) it becomes apparent that the object movements of the object (14) which cause the optical flow exceed a predefined movement tolerance value and undershoot a predefined distance limiting value (a₁, a₂, b₁, b₂),
wherein the at least one image-generating device (4) is deactivated just after the utility vehicle starts if an object (14) which triggers the warning signal is not indicated by said device (4).

2. Method according to Claim 1, **characterized in that**, in order to evaluate the object movements, a reference image (13) is recorded and stored when the vehicle is in a stationary state, wherein object movements are evaluated in relation to the reference image (13).

3. Method according to Claim 1 or Claim 2, **characterized in that** a defined distance value of the object (14) from the vehicle (1), denoted as a warning signal distance value, is predefined as a distance limiting value (a₁, a₂).

4. Method according to Claim 3, **characterized in that**, when a starting process, in particular an imminent starting process, can be detected from the operator control of the vehicle or when a vehicle is starting and a warning signal has already been output owing to an object (14) having been located in the defined environment region, a further, second distance limiting value (b₁, b₂) which is closer to the vehicle (1) than the warning signal distance limiting value (a₁, a₂) is predefined, wherein an alarm signal is output if during the evaluation of the optical flow with the evaluation device (8) it becomes apparent that the object (14) which is triggering the warning signal has also undershot the second distance limiting value (b₁, b₂).

5. Method according to Claim 4, **characterized in that** the alarm signal differs from the warning signal.

6. Method according to one of Claims 1 to 5, **characterized in that** the warning signal is an optical warning signal in the form of a warning lamp in the passenger compartment of the vehicle, in particular in the vehicle driver's cab (2) and/or in the form of an image which is represented on a screen (12) in the passenger compartment of the vehicle, in particular the vehicle driver's cab (2), which image shows the environment and the object (14) triggering the warning signal.

7. Method according to Claim 6, **characterized in that** the image also shows the vehicle (1) with its vehicle external contour.

8. Method according to one of Claims 4 to 7, **characterized in that** the alarm signal is an acoustic warning signal.

9. Method according to one of Claims 1 to 8, **characterized in that** different distance limiting values are defined for individual environment sub-regions (5, 6) within the predefined environment region (7).

10. Method according to Claim 9, **characterized in that** a first environment sub-region (5) is defined by a predefined region in front of the vehicle (1) and a second environment sub-region (6) is defined by a predefined region on one or both longitudinal sides, as a driver's side or respective front seat passenger's side.

11. Method according to one of Claims 1 to 10, **characterized in that** the defined environment region (7) is detected in image form by at least one camera (4) arranged on the vehicle (1) as an image-generating device, in particular an omni-directional camera.

12. Driver assistance system for a utility vehicle, for carrying out one of the methods according to one of Claims 1 to 11.

## Revendications

1. Procédé de surveillance à base d'image de l'environnement d'un véhicule utilitaire,
comprenant au moins un dispositif de formation d'image (4) qui est activé lorsque le véhicule est au repos ou lorsque la vitesse du véhicule s'abaisse en dessous d'une vitesse de véhicule minimale prédéterminée et qui détecte une zone environnante définie (7) à l'avant d'un habitacle de véhicule (2) et une zone latérale du véhicule du côté conducteur et/ou passager,
dans lequel un flux optique dû à des mouvements d'objet d'un objet (14) à l'intérieur de la zone environnante définie est détecté et évalué lorsque le véhicule (1) est à l'arrêt par un dispositif d'évaluation (8), et
dans lequel un signal d'avertissement est émis lorsque l'évaluation du flux optique au moyen du dispositif d'évaluation (8) montre que les mouvements d'objet de l'objet (14) provoquant le flux optique dépassent une tolérance prédéterminée de mouvement et s'abaissent en dessous d'une valeur limite prédéterminée de distance (a₁, a₂, b₁, b₂), et
dans lequel l'au moins un dispositif de formation d'image (4) est désactivé peu de temps après le démarrage du véhicule utilitaire si aucun objet (14) déclenchant le signal d'avertissement n'est indiqué par celui-ci.

2. Procédé selon la revendication 1, **caractérisé en ce que** pour l'évaluation des mouvements d'objet à l'arrêt du véhicule, une image de référence (13) est acquise et stockée, les mouvements d'objet étant évalués par rapport à l'image de référence (13).

3. Procédé selon la revendication 1 ou la revendication 2, **caractérisé en ce qu'**une valeur de distance définie de l'objet (14) désignée en tant que valeur de distance de signal d'avertissement est prédéterminée par le véhicule (1) en tant que valeur limite de distance (a1, a2).

4. Procédé selon la revendication 3, **caractérisé en ce que** lors d'un processus de démarrage pouvant être déterminé à partir du fonctionnement du véhicule, notamment lors d'un processus de démarrage imminent, ou lors d'un démarrage du véhicule et lorsqu'un signal d'avertissement a déjà été émis sur la base d'un objet (14) localisé dans la zone environnante définie, une seconde valeur limite de distance (b₁, b₂) a été ou est prédéterminée, celle-ci se situant plus près du véhicule (1) que la valeur limite de distance de signal d'avertissement (a₁, a₂), dans lequel un signal d'alarme est délivré lorsque l'évaluation du flux optique à l'aide du dispositif d'évaluation (8) montre que l'objet (14) déclenchant le signal d'avertissement est également passé en dessous de la seconde valeur limite de distance (b₁, b₂).

5. Procédé selon la revendication 4, **caractérisé en ce que** le signal d'alarme est différent du signal d'avertissement.

6. Procédé selon l'une quelconque des revendications 1 à 5, **caractérisé en ce que** le signal d'avertissement est un signal d'avertissement optique sous la forme d'un témoin lumineux dans l'espace intérieur du véhicule, notamment dans l'habitacle (2) du véhicule, et/ou sous la forme d'une image représentée sur un écran (12) dans l'espace intérieur du véhicule, notamment dans l'habitacle (2) du véhicule, celui-ci représentant l'environnement et l'objet (14) déclenchant le signal d'avertissement.

7. Procédé selon la revendication 6, **caractérisé en ce que** l'image représente en outre le véhicule (1) avec son contour de véhicule extérieur.

8. Procédé selon l'une quelconque des revendications 4 à 7, **caractérisé en ce que** le signal d'alarme est un signal d'avertissement acoustique.

9. Procédé selon l'une quelconque des revendications 1 à 8, **caractérisé en ce que** des valeurs limites de distance différentes sont prédéterminées à l'intérieur de la région environnante définie (7) pour des zones partielles individuelles environnantes (5, 6).

10. Procédé selon la revendication 8, **caractérisé en ce qu'**une première région environnante partielle (5) est définie par une région prédéterminée à l'avant du véhicule (1) et **en ce qu'**une seconde région environnante partielle (6) est définie par une région prédéterminée sur un côté longitudinal ou les deux côtés longitudinaux en tant que côté conducteur ou côté passager.

11. Procédé selon l'une quelconque des revendications 1 à 10, **caractérisé en ce que** la région environnante (7) est détectée visuellement par au moins une caméra (4) disposée sur le véhicule (1) en tant que dispositif de formation d'image, notamment une caméra omnidirectionnelle.

12. Système d'assistance au conducteur d'un véhicule utilitaire, destiné à mettre en oeuvre un procédé selon l'une quelconque des revendications 1 à 11.
